Europäisches Patentamt

(19) European Patent Office

Office européen des brevets

(11) Numéro de publication: **0 197 874**
**B1**

(12) **FASCICULE DE BREVET EUROPEEN**

(45) Date de publication du fascicule du brevet: **10.10.90**

(51) Int. Cl.⁵: **F 16 L 37/08**

(21) Numéro de dépôt: **86460003.6**

(22) Date de dépôt: **17.03.86**

(54) **Perfectionnement de l'élément d'accrochage élastique de systèmes de raccordement instantané pour les conduits de fluide.**

(30) Priorité: **19.03.85 FR 8504166**

(43) Date de publication de la demande:
**15.10.86 Bulletin 86/42**

(45) Mention de la délivrance du brevet:
**10.10.90 Bulletin 90/41**

(84) Etats contractants désignés:
**DE GB IT SE**

(56) Documents cités:
**FR-A-2 011 558**
**FR-A-2 291 438**
**FR-A-2 331 742**
**GB-A-2 060 106**
**US-A-4 035 005**

(73) Titulaire: **Legris-Société Anonyme dite**
**29, rue de la Palestine**
**F-35014 Rennes Cedex (FR)**

(72) Inventeur: **Legris, André**
**18 rue des Professeurs Pellé**
**F-35000 Rennes (FR)**

(74) Mandataire: **Dubreuil, Annie**
**Cabinet DUBREUIL Le Suffren 23 rue des**
**Peupliers**
**F-56100 Lorient (FR)**

**Description**

La présente invention est un perfectionnement de l'élément d'accrochage élastique multiple des systèmes de raccordement instantané pour les conduits de fluide de tubes semi-rigides ou rigides en matière plastique et métallique sur des composants d'automatisme pneumatique, destinés à établir des connexions sans qu'aucune préparation spéciale du conduit soit nécessaire.

Il existe actuellement sur le marché un certain nombre de raccords du style instantané dont l'élément de tenue du conduit peut être soit une pince métallique élastique, soit une pince plastique armée de dents d'accrochage, soit une rondelle plastique crantée, soit deux demi-rondelles arc-boutantes, etc. Tous ces systèmes présentent l'inconvénient majeur de posséder une seule couronne de dents d'accrochage, ce qui peut être un inconvénient important lorsque ces éléments sont appelés à assurer des connexions sur des circuits où la sécurité ets primordiale, tels que ceux des circuits de freinage de véhicules de tourisme ou poids lourds. Certains systèmes de connection ont une partie de leur corps formant l'élément agrippant de tenue du conduit de fluide, dans un tel système, le tube n'est jamais démontable.

Parfois, certains systèmes ne permettent pas au tube de tourner dans son raccord, ce qui est indispensable pour des systèmes de connexion reliant des organes ayant un mouvement angulaire de rotation. Tel est le cas du raccord divulgué dans le document FR—A—2 331 742. Dans ce raccord qui comprend une chambre de forme tronconique, une bague présente une surface externe de forme tronconique complémentaire et, sur sa surface interne, une pluralité de dents font saillie à la façon de crochets, lesdites dents étant distribuées en plusieurs rangées sur le pourtour. En fonctionnement, le serrage de la bague entre le tube et la paroi tronconique du raccord, condition de l'accrochage, s'oppose à la rotation de ladite bague dans le raccord et, par conséquent, à la rotation du tube.

La présente invention a pour objet de remédier à la lacune de l'accrochage uni-circulaire en présentant un élément de tenue du conduit qui possède au moins deux couronnes circulaires de dents d'accrochage, augmentant ainsi l'efficacité de l'élément de tenue pour les cas où les risques de glissement, aussi minimes soient-ils, ne doivent pas exister, tout en assurant que ledit élément soit libre en rotation dans un logement aménagé dans un corps lui permettant de n'agripper que le tube ou l'accessoire métallique. L'invention a pour objet un élément ou bague d'accrochage de conduit disposé dans un logement étagé d'un orifice de composant pneumatique ou tout autre organe de connexion. Dans une forme de réalisation, ce logement étagé présente un premier alésage recevant une rondelle d'arrêt derrière laquelle, dans un second alésage, est disposé un joint annulaire contre lequel vient prendre appui, par une de ses extrémités, une bague coulissante dont l'autre extrémité soutient l'élément de tenue du tube à accrochage multiple. L'accrochage obtenu est définitif et permanent, mais reste rotatif et orientable. Les raccords vissés incorporant ce système peuvent donc être librement tournés, et donc dévissés et remontés.

Selon l'invention, un perfectionnement de l'organe d'accrochage d'un dispositif de raccordement instantané de conduits de fluide, pour le raccordement de tubes souples, semi-souples ou rigides, en matière plastique ou métalliques, ledit organe d'accrochage de forme extérieure générale cylindrique, métallique, qui maintient le tube, comportant deux ou plusieurs couronnes successives et circulaires d'éléments d'accrochage simultané du tube, est caractérisé en ce que les éléments d'accrochage sont des pattes s'étendant en biais dans l'intérieur du cylindre formé par ledit organe, lesdites pattes ayant leur extrémité échancrée en arc de cercle, et en ce que l'accrochage est obtenu par élasticité de la partie cylindrique de l'organe et des pattes d'accrochage, de sorte que l'organe d'accrochage peut être monté dans un raccord en gardant, en fonctionnement, une aptitude de rotation dans ledit raccord.

D'autres caractéristiques et avantages de la présente invention ressortiront de la description suivante d'un mode de réalisation donné uniquement à titre d'exemples non limitatifs; description faite en référence aux dessins annexés sur lesquels:

—la figure 1 est une vue en coupe de l'élément d'accrochage dans sa forme finale.

—la figure 2 est une vue en coupe de la section BB de la figure 1, de l'élément d'accrochage dans sa forme finale.

—la figure 3 est une vue développée de l'élément d'accrochage.

—la figure 4 est une vue en bout de l'élément d'accrochage dans sa forme finale.

—la figure 5 est une vue en coupe d'un dispositif dans une forme de réalisation de raccord droit à vis démontable.

la figure 6 est une vue en coupe d'un dispositif dans une autre forme de raccord métallique.

—la figure 7 est une vue en coupe d'un dispositif, dans une forme de raccord en matière plastique.

—la figure 8 est une vue en coupe d'un dispositif cartouché dans un composant pneumatique ou pour tout autre usage, à vis, démontable.

—la figure 9 est une vue en coupe d'une autre forme de bague d'accrochage élastique.

—la figure 10 est le plan développé de cette autre bague d'accrochage.

—la figure 11 est une vue en coupe d'un raccord à démontage instantané du tube.

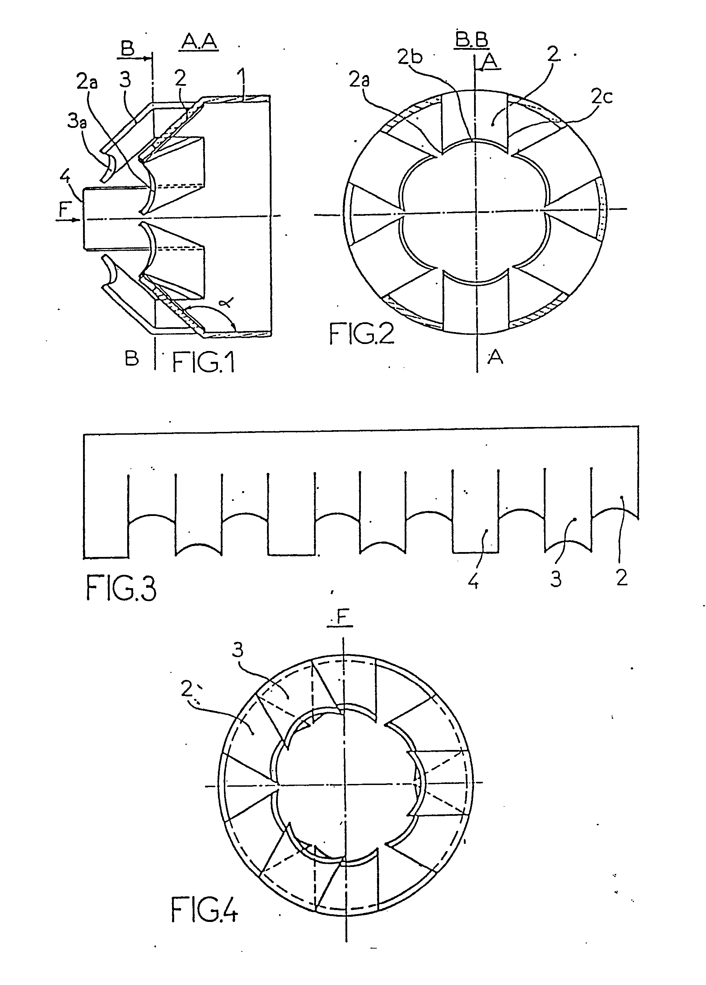

A la figure 1, on a représenté une bague d'accrochage élastique, multiple, de forme extérieure cylindrique (1), aménagée avec une première couronne de plusieurs pattes d'accrochage (2), au nombre de 6, devant laquelle est disposée une seconde couronne de plusieurs pattes d'accrochage (3), au nombre de 3. A la partie avant de cette bague, 3 languettes (4) servent de butée longitudinale de fond de logement de l'alésage recevant cette bague. Les pattes d'accrochage (2) et (3) sont cambrées suivant un angle (α).

A la figure 2, on a représenté une vue en bout suivant la coupe BB, de la bague d'accrochage, montrant la première couronne des 6 pattes d'accrochage (2). Celles-ci représentent chacune à leur extrêmité: deux arêtes très vives (2a), intersections des côtés parallèles (2c) et des arcs de cercle (2b), faisant échancrure pour augmenter la pénétration des arêtes (2a) sur le diamètre extérieur du conduit à relier.

A la figure 3, on a représenté le développé de la bague d'accrochage où sont découpées et cisaillées les pattes (2), (3) et (4); la forme définitive de la pièce étant obtenue après roulage du flanc et cambrage des pattes d'ancrage.

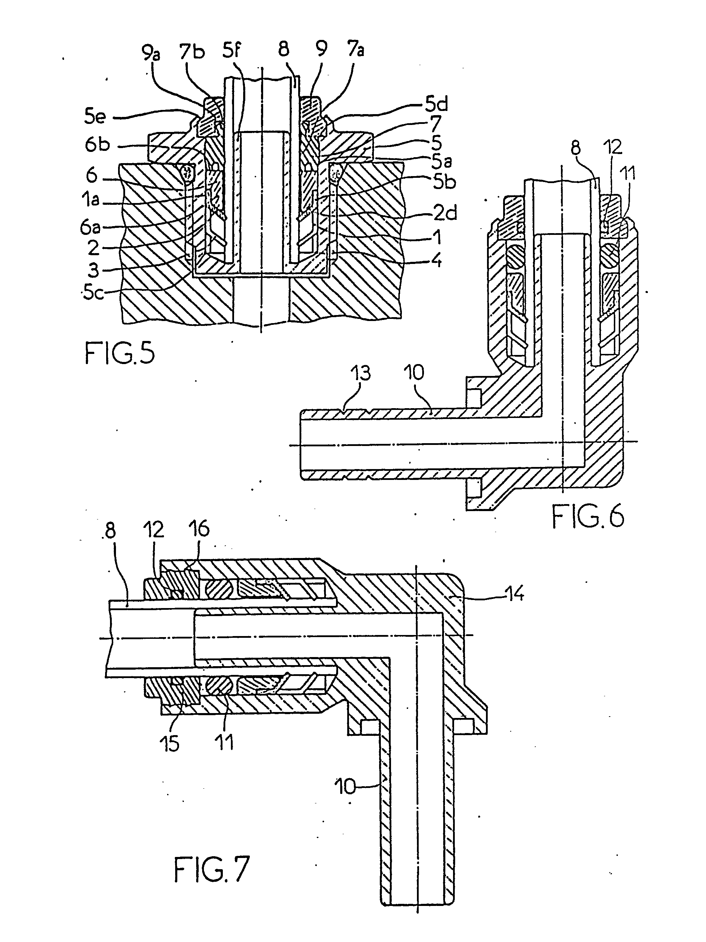

A la figure 4, on a représenté une vue en bout de la bague d'accrochage, montrant les deux couronnes de pattes d'accrochage (2) et (3), décalées longitudinalement et radialement.

A la figure 5, on a représenté un raccord d'implantation comprenant un corps (5), possédant on logement étagé (5a) dans lequel est disposé dasn le plus petit diamètre (5b), la bague d'accrochage multiple (1) venant en butée longitudinale par plusieurs languettes (4) contre le fond (5c) de l'alésage (5b). Dans le diamètre (1a) de la bague, pénètre une bague d'appui (6) ayant pour but de soutenir par un cône (6a) les pattes (2) sur leur face (2d) afin d'éviter leur retournement. Le couple formé par la bague d'accrochage (1) et la bague d'appui (6) coulisse librement dans l'alésage (5b) du corps (5), ce qui permet d'augmenter le serrage du joint annulaire (7) sur le tube (8) par l'intermédiaire de la face (6b) de l'élément (6), et ce qui garantit aussi l'orientabilité et la rotation du tube ou de l'accessoire monté dans le raccord. L'orientation du cambrage des pattes d'ancrage (2) et (3) est faite de telle façon à favoriser la pénétration du tube dans la bague (1). Une caractéristique importante de l'invention est que le tube tourne librement, entraînant la bague d'appui (6) et la bague d'accrochage (1) pouvant tourner dans l'alésage (5b). Le tube est soutenu dans son diamètre intérieur par une fourrure tubulaire (5f) faisant partie du corps (5) ou d'un organe indépendant. Lorsque le tube (8) est emmanché, tout effort tendant à l'extraire du raccord intensifie la pénétration des dents 2a et 3a des couronnes d'encrage. Le joint annulaire (7) comporte une partie principale (7a) assurant l'étanchéité sur le tube (8). La zone (7b) assure l'étanchéité extérieure dans le logement du corps (5). La partie avant torique, annulaire (7b) de ce joint, isolé dans une gorge (9a) aménagée dans la rondelle de maintien (9), sert de protection anti-poussière, anti-peinture, évitantàtoute substance extérieure de pénétrer à l'intérieur du raccord. La rondelle de maintien (9) sertie par la lèvre (5e) du corps (5) et en butée contre la face intérieure (5d) du premier alésage, maintient l'ensemble des organes constituant la tenue et l'étanchéité du tube à l'intérieur du raccord.

A la figure 6, on a représenté un raccord à 90° qui diffère de la figure 5 par sa forme extérieure et dans sa conception par un joint annulaire torique (11), assurant l'étanchéité sur le diamètre extérieur du tube ainsi que par un joint annulaire torique (12) de protection, non solidaire du joint (11). Les gorges (13) aménagées dans la partie mâle (10) permettent de favoriser l'ancrage des pattes de la bague d'accrochage lors de son introduction dans un raccord tel que représenté figure 5. Différentes formes de gorges de tenue peuvent être utilisées sur les queues métalliques (10): triangulaires, rectangulaires, demi-rondes. La caractéristique principale étant que la dite gorge (13) ne doit pas abimer ou couper le joint (7), (12) et (11) à leur passage, ni se bloquer sur le dit joint, et donc d'avoir des angles non coupants et de faibles dimensions.

A la figure 7, on a représenté un raccord identique à celui de la figure 6, mais dans un corps en matière plastique (14), dans lequel une douille (15) est emmanchée, munie de plusieurs dents d'accrochage (16).

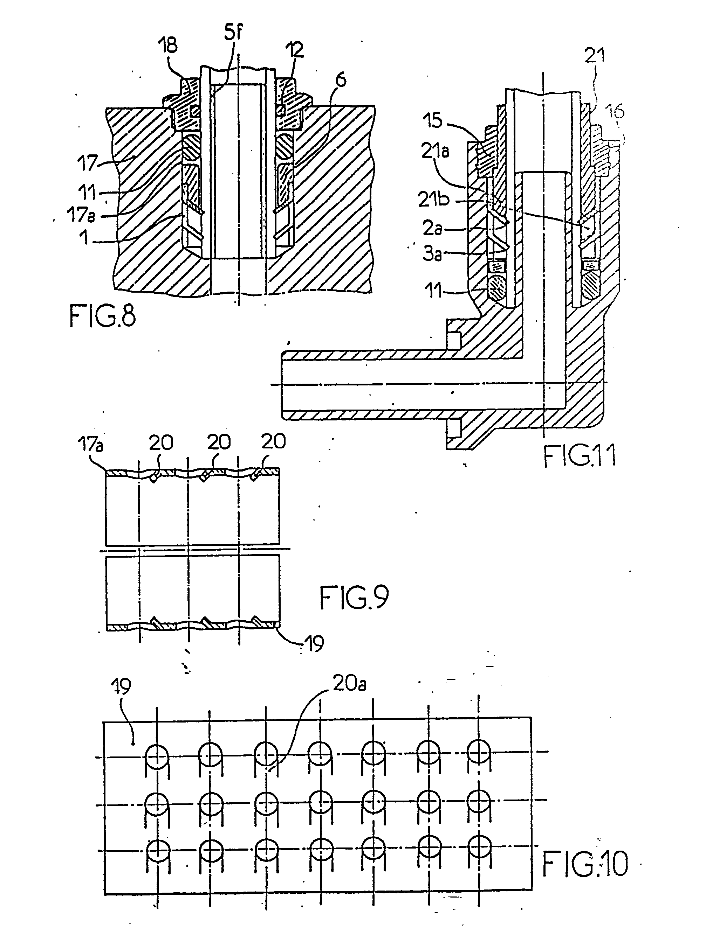

A la figure 8, on a représenté un logement dans un appareil (17), suivant l'invention, le dit logement étagé (17a), recevant successivement la bague d'accrochage (1), la bague d'appui (6) le joint annulaire d'étanchéité (11). Une vis de maintien (18), dans laquelle est logé le joint circulaire de protection (12), réalise l'assemblage de tous ces éléments. L'ensemble est démontable par dévissage de la vis (18).

A la figure 9, on a représenté une bague élastique fendue (19) d'accrochage multiple avec 3 couronnes de pattes d'accrochage (20) obtenues par poinçonnage et roulage; cette bague est un autre exemple de réalisation de la bague d'accrochage de la figure 1.

A la figure 10, on a représenté la bague élastique (19) développée, où les pattes de la figure 9 sont obtenues par poinçonnage (20a).

A la figure 11, on a représenté un raccord instantané utilisant la pièce d'accorchage (1) suivant l'invention, mais dans lequel la dite pièce est placée à l'entrée du tube avant le joint, et dans lequel un poussoir (21) possédant deux rangées de becs (21a) et (21b) décalés axialement et radialement agissent sur les deux rangées de pattes d'accrochage (2a) et (3a), permettant par poussée sur le bout (21a) du poussoir (21) d'écarter du tube les pattes (2a) et (3a) et ainsi de démonter le tube. L'ensemble conformément à l'invention restant à tube au accessoires orientables et rotatifs. Le montage du tube se fait en appuyant sur le poussoir (21) dont les parties (21a) et (21b) soulèvent les pattes d'accrochage (2a) et (3a) pour éviter de rayer le tube.

## Revendications

1. Organe d'accrochage d'un dispositif de raccordement instantané de conduits de fluide, par le raccordement de tubes souples, semi-souples ou rigides, en matière plastique ou métalliques, ledit organe d'accrochage (1 ou 19) de forme extérieure générale cylindrique, métallique, qui maintient le tube, comportant deux ou plusieurs couronnes successives et circulaires d'éléments d'accrochage simultané du tube, caractérisé en ce que les éléments d'accrochage sont des pattes (2, 3 ou 20) s'étendant en biais dans l'intérieur du cylindre formé par ledit organe, lesdites pattes ayant leur extrémité échancrée en arc de cercle, et en ce que l'accrochage est obenut par élasticité de la partie cylindrique de l'organe et des pattes d'accrochage, de sorte que l'organe d'accrochage peut être monté dans un raccord en gardant, en fonctionnement, une aptitude de rotation dans ledit raccord.

2. Organe d'accrochage selon la revendication 1, caractérisé en ce qu'il possède deux ou plusieurs butées longitudinales avant (4).

3. Organe d'accrochage métallique selon la revendication 1 ou 2, caractérisé en ce qu'il est obtenu par roulage.

4. Organe d'accrochage suivant l'une des revendications 1 à 3, caractérisé en ce qu'un élément de maintien (6) est prévu pour éviter aux pattes d'accrochage (2, 3) de se retourner sous l'effet d'un effort opposé à celui de l'emmanchement du tube.

5. Organe d'accrochage selon la revendication 4, caractérisé en ce que le couple formé par la bague d'accrochage (1) et la pièce de maintien (6) augmente le serrage des joints d'étanchéité (7, 12) lors du déplacement de ce couple contre le joint sous l'effet de la pression, ledit raccord étant ainsi auto-serreur et auto-étanche.

6. Organe d'accrochage selon la revendication 1, caractérisé en ce qu'il comporte plusieurs rangées de pattes successives, réalisées par poinçonnage de trous et découpage-pliage de presqu'un demi-trou, formant les pattes (20) sur plusieurs rangées, ledit organe en forme de bague cylindrique non fermée ayant sa butée avant (17a) formée par l'extrémité du cylindre.

7. Organe d'accrochage selon l'une des revendications 1 à 3, caractérisé en ce qu'il est à deux rangées de pattes d'accrochage (2a, 3a), et en ce qui lui est associé un poussoir (21) ayant deux rangées de becs (21a, 21b) agissant respectivement sur les deux rangées de pattes d'accrochage (2a, 3a), ledit poussoir permettant d'écarter les pattes (2a, 3a) du tube afin de la désaccoupler.

8. Organe d'accrochage selon l'une des revendications 1 à 7, caractérisé en ce qu' un soutien tubulaire (5f) destiné à former un soutien intérieur du tube à raccorder contre la déformation en serrage des pattes d'accrochage (2a, 3a) lui est associé.

**Patentansprüche**

1. Einhängeelement für eine Schnellkupplung an Flüssigkeitsleitungen zur Verbindung von elastischen, halbelastischen oder starren Rohren aus Plastikmaterial oder metallischem Material, wobei das Einhängeelement (1 oder 19) von allgemein zylindrischer, metallischer, das Rohr festhaltender Form zwei oder mehr aufeinanderfolgende und kreisförmige Kränze von Elementen zum gleichzeitigen Einhängen des Rohres umfaßt, dadurch gekennzeichnet, daß die Einhängeelemente Befestigungslaschen (2, 3 oder 20) sind, die sich in schräger Richtung in das Innere des von dem Element gebildeten Zylinders erstrecken und jeweils ein kreisbogenförmig ausgespartes Ende besitzen, und daß das Einhängen durch die Elastizität des zylindrischen Teils des Elementes und durch die Einhängelaschen erzielt wird, derart, daß das Einhängeelement so in eine Kupplung eingebaut wird, daß es während des Betriebs seine Fähigkeit zur Drehung in der Kupplung beibehält.

2. Einhängeelement gemäß Anspruch 1, dadurch gekennzeichnet, daß es zwei oder mehr longitudinale Vorschubanschläge (4) besitzt.

3. Metallisches Einhängeelement gemäß Anspruch 1 oder 2, dadurch gekennzeichnet, daß es durch Rollformung erhalten wird.

4. Einhängeelement gemäß einem der Ansprüche 1 bis 3, dadurch gekennzeichnet, daß ein Halteelement (6) vorgesehen ist, um zu vermeiden, daß die Einhängelaschen (2, 3) unter der Wirkung einer Belastung, die derjenigen des Rohreinsteckendes entgegengesetzt ist, umkanten.

5. Einhängeelement gemäß Anspruch 4, dadurch gekennzeichnet, daß die durch den Eingängering (1) und das Halteteil (6) gebildete Kupplung die Klemmung von Dichtungen (7, 12) verstärkt, wenn diese Kupplung unter der Wirkung des Drucks gegen die Dichtung verschoben wird, so daß die Verbindung selbstklemmend und selbstdichtend ist.

6. Einhängeelement gemäß Anspruch 1, dadurch gekennzeichnet, daß es mehrere Reihen aufeinanderfolgender Befestigungslaschen umfaßt, die durch die Ausstanzung von Löchern und die Stanzung/Biegung eines angenäherten Halblochs hergestellt werden, wodurch die Befestigungslaschen (20) an einer Mehrzahl von Reihen gebildet werden, wobei der Vorschubanschlag (17a) des in Form eines zylindrischen, nicht verschlossenen Anschlags ausgebildeten Elementes durch das Ende des Zylinders gebildet wird.

7. Einhängeelement gemäß einem der Ansprüche 1 bis 3, dadurch gekennzeichnet, daß es mit zwei Reihen von Einhängelaschen (2a, 3a) ausgebildet ist und daß ihm eine Durckvorrichtung (21) mit zwei Reihen von Nasen (21a, 21b), die entsprechend auf die zwei Reihen von Einhängelaschen (2a, 3a) wirken, angehört, wobei die Druckvorrichtung erlaubt, die Laschen (2a, 3a) vom Rohr abzuspreizen, um dessen Kupplung zu lösen.

8. Einhängeelement gemäß einem der Ansprüche 1 bis 7, dadurch gekennzeichnet, daß ihm eine rohrförmige Tragvorrichtung (5f) angehört, die zur Ausbildung einer inneren Stütze des zu verbindenden Rohres gegen die Verformung bei der Festklemmung der Einhängelaschen (2a, 3a) dient.

## Claims

1. A coupling member for a device for instant connection of fluid conduits, for connection of flexible, semi-flexible and rigid tubes, of plastics material or of metal, the said coupling member (1 or 19), of metal and of generally cylindrical outer shape, which holds the tube, comprising two or more successive and circular rings of elements for simultaneous hooking onto the tube, characterized in that the hooking elements are lugs (2, 3 or 20) extending obliquely into the inside of the cylinder formed by the said member, the said lugs having their ends scalloped into circular arcs, and in that the hooking-on is secured by virtue of the elasticity of the cylindrical part of the member and/or of the hooking lugs, so that the coupling member may be installed in a connector whilst retaining an ability to rotate within said connector during operation.

2. A coupling member according to claim 1, characterized in that it has two or more longitudinal forward stops (4).

3. A metallic coupling member according to claim 1 or claim 2, characterized in that it is produced by rolling.

4. A coupling member according to one of claims 1 to 3, characterized in that a securing element (6) is provided to prevent the hooking lugs (2, 3) from being inverted under the action of a force opposed to that of the engagement of the tube.

5. A coupling member according to claim 4, characterized in that the couple produced by the hooking ring (1) and the securing element (6) increases the tightening of the sealing joints (7, 12) during the displacement of this couple against the joint under the effect of the pressure, the said connector thus being self-tightening and self-sealing.

6. A coupling member according to claim 1, characterized in that it comprises several rows of successive lugs formed by punching holes and excision and folding of almost semi-holes, forming the lugs (20) over several rows, the said member, in the form of an unclosed cylindrical ring, having its forward stop (17a) formed by the end of the cylinder.

7. A coupling member according to one of claims 1 to 3, characterized in that it has two rows of hooking lugs (2a, 3a) and in that there is associated with it a push member (21) comprising two rows of projections (21a, 21b) acting on the two rows of hooking lugs (2a, 3a) respectively, the said push member allowing the lugs (2a, 3a) to be moved away from the tube to disengage them.

8. A coupling member according to one of the claims 1 to 7, characterized in that there is associated with it a tubular support (5f) intended to form an internal support for the tube to be coupled, against the deformation under tightening of the hooking lugs (2a, 3a).

FIG.1

FIG.2

FIG.3

FIG.4

FIG.5

FIG.6

FIG.7

FIG.8

FIG.9

FIG.10

FIG.11